# FASCICULE DE BREVET EUROPEEN

(11) **EP 3 711 142 B1**
(45) Date de publication et mention de la délivrance du brevet: **07.01.2026**
(21) Numéro de dépôt: 18816190.5
(22) Date de dépôt: 14.11.2018
(51) Int. Cl.: H02K 1/20, H02K 1/32, H02K 9/02, H01F 7/02, H01F 27/10, H02K 9/04

(54) **MACHINE ELECTRIQUE D'UNE TURBOMACHINE COMPRENANT UN ROTOR REFROIDI PAR CANAL DE REFROIDISSEMENT**
ELEKTRISCHE MASCHINE EINER TURBOMASCHINE MIT EINEM DURCH EINEN KÜHLKANAL GEKÜHLTEN ROTOR
ELECTRICAL MACHINE OF A TURBOMACHINE COMPRISING A ROTOR COOLED BY A COOLING CHANNEL

(30) Priorité: 14.11.2017 FR 1760674
(43) Date de publication de la demande: 23.09.2020
(73) Titulaire: Safran Helicopter Engines, 64510 Bordes (FR)
(72) Inventeur: KLONOWSKI, Thomas, 77550 Moissy-Cramayel (FR); SERGHINE, Camel, 77550 Moissy-Cramayel (FR); FREALLE, Jean-Luc Charles, Gilbert, 77550 Moissy-Cramayel (FR); COMBEBIAS, Sébastien, 77550 Moissy- Cramayel (FR); VONFELT, Jean-Julien Camille, 77550 Moissy-Cramayel (FR)
(74) Mandataire: Regimbeau
(86) Numéro de dépôt international: PCT/FR2018/052832
(87) Numéro de publication internationale: WO 2019/097160

(56) Documents cités:
- EP-A2- 2 779 366
- DE-A1- 102008 020 426
- FR-A1- 2 875 965
- JP-A- 2008 312 292
- JP-A- 2011 254 577
- US-A1- 2002 009 362
- US-A1- 2004 155 537
- US-A1- 2015 280 523
- JACIM JACIMOVIC ET AL: "Net Shape 3D Printed NdFeB Permanent Magnet", ADVANCED ENGINEERING MATERIALS., vol. 19, no. 8, 21 April 2017 (2017-04-21), DE, pages 1700098, XP055491039, ISSN: 1438-1656, DOI: 10.1002/adem.201700098

## Description

### DOMAINE TECHNIQUE GENERAL

L'invention concerne les moteurs d'aéronef en particulier ceux d'un hélicoptère. Elle concerne particulièrement les machines électriques installées sur les moteurs d'hélicoptères réalisant la fonction de génération d'énergie électrique, et /ou de motorisation électrique de certains organes mécaniques. Ces machines électriques peuvent être des générateurs-démarreurs, des démarreurs, des alternateurs ou des pompes électriques qui sont soit des machines à courant continu ou à courant alternatif.

### ETAT DE LA TECHNIQUE

Un moteur d'un aéronef comprend des machines électriques comprenant un rotor (partie tournante) et un stator (partie fixe), le stator comprend un circuit magnétique et un circuit électrique constitué par un ensemble de bobinages composés de fils conducteurs.

De manière connue, de telles machines électriques présentent des phases transitoires de fonctionnement rencontrées principalement lors des séquences de démarrage ou d'accélération du moteur de l'aéronef ou de certains équipements que comprend le moteur de l'aéronef.

Au cours de ces phases transitoires, la machine électrique ainsi fortement sollicitée, dissipe une quantité de chaleur qui peut s'avérer dommageable pour elle-même, chaleur principalement dissipée dans les circuits électriques et/ou sur les aimants permanents si la machine en comprend.

De manière connue, pour favoriser la dissipation de la chaleur et ainsi garantir l'intégrité de la machine électrique, on surdimensionne les éléments qui la composent ce qui pénalise sa masse et son encombrement.

En effet, la structure et le dimensionnement d'une machine électrique sont guidés par sa tenue en thermique et cela est principalement fonction de l'amplitude des courants électriques qu'elle supporte au sein de ces bobinages conducteurs (par exemple, une machine électrique fonctionnant sous une tension réseau de 28Vdc, sous une puissance de plusieurs kW ou kVA donnera des courants électriques d'intensité élevées pouvant atteindre plusieurs centaines d'ampères).

Afin d'optimiser la dissipation thermique de la machine électrique, plusieurs solutions sont d'ores et déjà connues et exploitées. Les documents US 2004/0155537A1 et US 2015/0280523 A1 décrivent de telles machines électriques.

Une première solution utilise la convection naturelle avec refroidissement par dissipateur à ailettes en périphérie de la machine électrique pour avoir une surface d'échange importante avec le milieu environnant. Toutefois, cette solution est encombrante et massive et nécessite souvent un flux d'air en périphérie de la machine.

Une seconde solution utilise la convection forcée par l'ajout d'un ventilateur connecté à l'arbre rotor de la machine électrique, dont le flux d'air ainsi produit échangera avec les parties externes et/ou internes de celle-ci. Toutefois, cette solution est encombrante et peut générer des sources de pannes supplémentaires.

Une troisième autre solution utilise un refroidissement forcé en injectant un liquide circulant dans des canaux dédiés à l'intérieur de la machine électrique ou en périphérie (eau, huile, carburant, etc.) et nécessite le plus souvent la présence d'un échangeur supplémentaire pour assurer le refroidissement de ce liquide. Toutefois, cette solution est aussi encombrante, massive et intrusive, et nécessite des pas de maintenance assez courts (i.e. gestion des étanchéités).

Une quatrième solution utilise un refroidissement par module thermoélectrique (effet Peltier). Toutefois, avec cette solution le refroidissement est réalisé uniquement sur des zones localisées et nécessite également une alimentation stabilisée permettant l'alimentation thermoélectrique.

Ainsi, dans une application aéronautique, c'est-à-dire dans le cadre d'un système embarqué exigeant de fortes contraintes en termes de compacité, masse et fiabilité, les solutions existantes ne sont pas satisfaisantes.

### PRESENTATION DE L'INVENTION

L'invention permet de maitriser la température des aimants permanents à un niveau acceptable, ce qui garantira la stabilité de leurs propriétés magnétiques dans tous les cas d'utilisation, permanent ou transitoire.

A cet effet, l'invention propose une machine électrique selon la revendication 1.

La machine électrique définie ci-avant peut présenter en outre, de façon avantageuse et non limitative, les caractéristiques suivantes prises seules ou en l'une quelconque de leurs combinaisons techniquement possibles :
- le canal a un profil configuré pour qu'un fluide se propageant à l'intérieur du canal présente un écoulement turbulent ;
- le canal de propagation comprend une entrée de fluide et une sortie de fluide, l'entrée de fluide étant évasée dans le sens opposé de circulation du fluide ;
- l'aimant permanent et ledit au moins un canal sont obtenus selon un procédé de fabrication additive ;
- chaque aimant présente des canaux ayant des formes identiques ou différentes.

L'invention concerne également une machine à courant continu ou à courant alternatif tel qu'un générateur-démarreur, un alternateur, une pompe comprenant une machine électrique selon l'invention ainsi qu'un moteur d'un aéronef, tel qu'un hélicoptère, comprenant un démarreur-générateur selon l'invention.

Ainsi, l'invention consiste essentiellement à intégrer au sein même des aimants permanents des galeries de refroidissement qui permettent un management thermique optimal.

Les avantages de l'invention sont multiples.

L'invention permet d'améliorer les performances électromagnétiques de la machine électrique et donc l'obtention d'un couple mécanique accrue disponible sur le rotor par le maintien des caractéristiques d'induction magnétiques des aimants permanents dans une plage plus large de température.

L'invention permet de réduire la masse globale d'un moteur d'un aéronef en diminuant la masse de la machine électrique car il y a la possibilité supplémentaire d'accroitre les densités de courant admissible au niveau des bobinages du stator, ainsi l'effet dut au champ magnétique ainsi généré, perçue par les aimants permanents comme un champ de désaimantation (i.e. champ coercitif) est fortement réduit par la maitrise de leurs températures.

En outre, il n'y pas d'ajout de systèmes supplémentaires (i.e. échangeur, ailettes, ...) pénalisant le bilan masse, l'encombrement et la fiabilité de la machine électrique.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre une vue d'une machine électrique selon l'invention ;
- la figure 2 illustre un rotor d'une machine électrique selon l'invention ;
- la figure 3 illustre une vue en coupe de la figure 2.

Sur l'ensemble des figures les éléments similaires portent des références identiques.

### DESCRIPTION DETAILLEE DE L'INVENTION

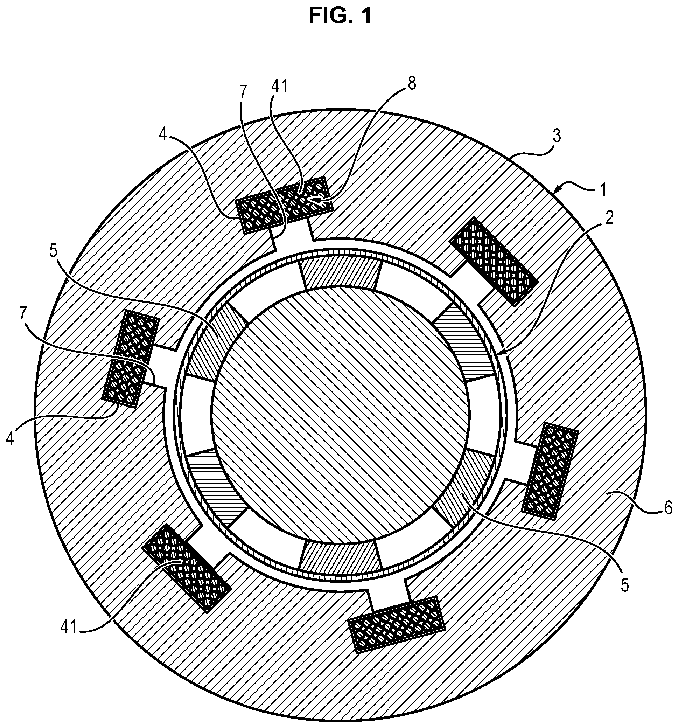

On a illustré sur la **figure** 1, une machine électrique selon un mode de réalisation de l'invention. Une telle machine électrique est notamment utilisée dans un moteur d'aéronef.

La machine électrique de la figure 1 est une machine à aimants permanents et comprend un stator 1 et un rotor 2 (le stator et le rotor de cette figure peuvent être inversés).

Le stator 1 comprend un circuit magnétique 3. Le circuit magnétique 3 comprend une portion périphérique 6 de forme générale cylindrique et des pôles 7 s'étendant vers le rotor 2 et le stator 1 comprend un circuit électrique 4 constitué d'un bobinage de plusieurs éléments 41 conducteur autour de chaque pôle 7 du circuit magnétique 3. Sur cette figure, les éléments 41 conducteurs sont de section cylindrique mais d'autres sections peuvent être envisagées.

Le rotor 2 supporte des aimants permanents 5. Sur la figure 1, la machine électrique comprend six aimants permanents 5 mais un nombre différent peut être envisagé.

Ce type de topologie de machine électrique permet de fonctionner soit en mode générateur (i.e., le rotor 2 tourne grâce à l'application d'un couple mécanique externe et la variation de flux magnétique dans le circuit électrique 4 induit un courant électrique) ou en mode moteur (i.e. l'alimentation du circuit électrique 4 engendre un flux magnétique à travers le circuit magnétique 3 et l'interaction avec le flux magnétique issu des aimants 5 engendre une rotation du rotor 2 donc un couple mécanique vers l'extérieur).

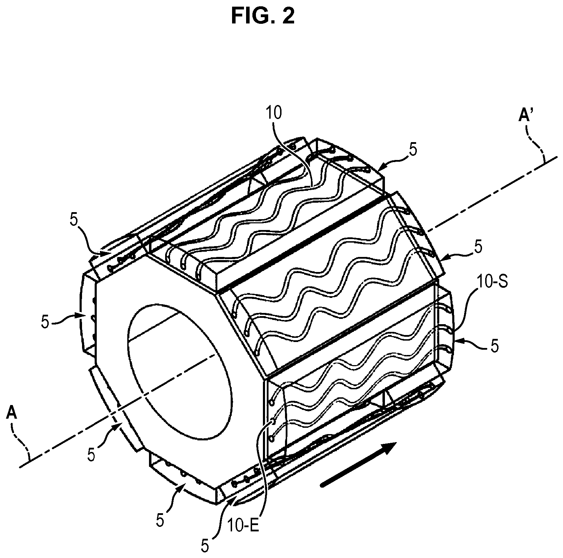

En relation avec la **figure** 2 qui illustre un rotor d'une machine électrique, afin de favoriser la dissipation de la chaleur de la machine électrique au cours notamment des phases transitoires présentées précédemment, chaque aimant 5 permanent comprend des canaux permettant la circulation d'un fluide.

Dans la configuration d'aimants permanents en rotation, fixés sur le rotor de la machine électrique, ce fluide sera principalement de l'air contenant ou non des vapeurs d'huile.

Dans le cas d'aimants permanents fixes positionnés au stator de la machine électrique selon un exemple comparatif ne faisant pas partie de l'invention, ce fluide pourra être gazeux tels que décrits précédemment où tout autre gaz neutre compatible de circuit électrique (Argon, Azote...) ou liquide (eau, huile, carburant...).

Le fluide peut être transporté à proximité de la zone d'alimentation des canaux de différentes manières qui ne seront pas décrites ici.

Chaque canal 10 s'étend longitudinalement à l'intérieur de l'aimant permanent selon une direction parallèle à l'axe de rotation AA' du rotor. Une telle orientation permet de faire circuler le fluide depuis une entrée 10-E de fluide vers une sortie 10-S de fluide du canal 10 selon une direction de circulation de fluide (flèche remplie sur la figure 2).

Dans le cas d'aimants permanents en rotation, c'est la rotation du rotor 2 qui permet de faire circuler le fluide dans les canaux 10.

Dans le cas d'aimants permanents fixes selon un exemple comparatif ne faisant pas partie de l'invention l'alimentation en fluide peut être forcée par un système annexe non décrit ici (i.e. ventilateur pour du gaz, pompe pour un liquide), ce dernier exemple concernera uniquement la configuration à aimants permanents fixe au stator.

Selon les cas, on peut prévoir que la machine électrique est dite « fermée » c'est-à-dire qu'elle étanche vis-à-vis de l'environnement extérieur ou dite « ouverte » avec une circulation possible, forcé ou non, de l'air environnant au sein même de la machine.

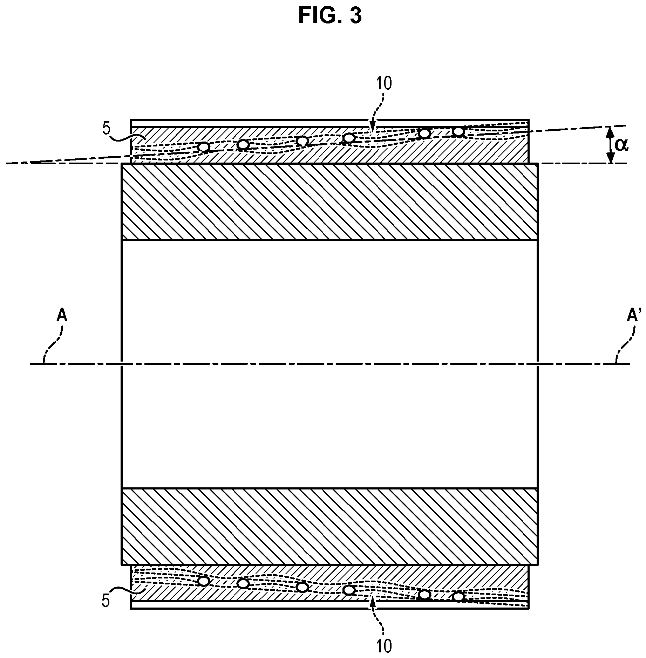

Pour améliorer la circulation du fluide et comme cela est illustré sur la **figure** 3, les canaux ne sont pas parallèles à l'axe AA' de rotation du rotor mais ont une inclinaison α non nulle par rapport à cet axe. Ainsi, une telle inclinaison permet de créer un phénomène d'aspiration du fluide ayant une direction du point situé sur le rayon le plus bas et allant vers le point situé sur le rayon le plus haut

En outre, l'angle d'inclinaison des canaux (entre 1 et 10 degrés, typiquement 5 degrés) est un paramètre qui permet d'obtenir un bon compromis débit/longueur/surface afin d'optimiser les échanges thermiques tout diminuant les pertes de charges subit par le fluide de refroidissement à l'intérieur des canaux.

Afin de minimiser les pertes d'entrée (i.e. au niveau de l'alimentation du ou des canaux) et maximiser la captation de débit, l'entrée 10-E de fluide est évasée (i.e. type Pitot) et orientée dans le sens de rotation du rotor 2 pour bénéficier de la pression dynamique. Afin de créer une légère dépression en sortie, favorisant le débit de circulation interne, la sortie 10-S sera elle orientée dans le sens opposé à celui de la rotation du rotor 2.

Afin de s'adapter à toutes les configurations rencontrées, en termes de niveau de pression statique à l'entrée et en sortie du canal de refroidissement, l'évolution de section du canal, le long de l'écoulement, peut être constante, divergente (i.e. dite « diffusive ») ou convergente.

Pour que l'échange thermique soit efficace il est nécessaire que la surface d'échange entre les canaux et l'aimant soit la plus grande possible, et il faut assurer un régime d'écoulement turbulent interne (i.e. caractérisé par le nombre de Reynolds en fonction du fluide utilisée).

On prévoit qu'au moins un aimant comprend au moins un canal. Toutefois, le nombre de canaux dépend de la taille de l'aimant mais en fonction de l'induction magnétique nominale recherchée pour les aimants ce nombre est optimisé pour d'une part augmenter l'efficacité du refroidissement et d'autre part pour réduire le coût de fabrication de l'aimant.

Selon l'invention et comme montré à la figure 2, la forme du canal est ondulée.

De manière complémentaire, la surface interne des canaux peut être lisse ou rugueuse avec une rugosité pouvant aller jusqu'à plusieurs dizaines de µm. Le choix de la surface rugueuse permet de favoriser les échanges thermiques par obtention dut dit régime d'écoulement turbulent mais entraine une réduction du débit de fluide à l'intérieur des canaux.

La taille des canaux est un paramètre important quant au bon refroidissement de l'aimant. Aussi, leur dimension sera de taille millimétrique pour permettre un bon écoulement du fluide localement dans les zones d'intérêts au cœur de l'aimant sans dégrader les pertes de charges.

A titre d'exemple en ayant des canaux inclinés avec une machine électrique tournant à des vitesses très rapides (> 30000 tr/min) cela crée une circulation du fluide de refroidissement à l'intérieur des canaux, en l'occurrence de l'air, pouvant atteindre des vitesses importantes proches de 50 - 100 m/s avec des débits massiques d'environ 0,1-0,2 g/s.

De manière complémentaire, pour éviter des pertes de charge trop importantes engendrées par des canaux de refroidissement trop long, ce qui pénaliserait les débits admissibles, dans le cas des rotors de forte longueur (>100 mm) une solution privilégiée est de fragmenter l'aimant selon son axe longitudinal ce qui présente notamment l'intérêt de diminuer les pertes par courant de Foucault, source de chaleur, circulant dans l'aimant.

De manière préférée, les aimants avec les canaux rugueux ou lisses sont fabriqués par un procédé de fabrication additive. En effet, les aimants permanents dit «durs» sont par nature fragile de sorte qu'il n'est pas envisageable de les percer ni même de les usiner.

Un tel procédé est du type SLM (en anglais, « *Selective Laser Melting »* pour fusion sélective par laser), EBM (en anglais, « *Electro Beam Melting »* pour Fusion par faisceau d'électrons) ou PIM (en anglais, « *Powder Injection Molding* » pour injection de poudre) dont le principe est de fusionner par un laser (SLM) ou faisceau d'électrons (EBM) des couches successives de poudre d'aimants. Ces deux procédés permettent d'avoir une matrice magnétique ayant une propriété de très bonne tenue mécanique qui est un aspect essentiel compte tenu des très hautes vitesses de rotation à laquelle tournent les rotors.

En outre, pour optimiser le cout de fabrication des aimants on augmente le nombre de canaux pour diminuer la quantité de poudre utilisée et diminuer le temps de fabrication.

De manière complémentaire, en plus d'avoir des canaux de refroidissement à l'intérieur des aimants, on peut disposer des dissipateurs de chaleur à d'autres endroits de la machine électrique comme décrit dans le document FR 3 012 698 au nom de la Demanderesse.

On a décrit ici une machine électrique avec un bobinage statorique et des aimants permanents au rotor.

L'invention concerne également une machine à courant continu ou à courant alternatif tel qu'un générateur-démarreur, un alternateur, une pompe comprenant une machine électrique telle que décrite ci-dessus.

Et l'invention concerne également un moteur d'un aéronef, tel qu'un hélicoptère, comprenant une machine électrique selon l'invention.

## Revendications

1. Machine électrique comprenant un stator (1) et un rotor (2) configurés pour être entrainés en rotation l'un par rapport à l'autre, ledit rotor (2) ou ledit stator comprenant une pluralité d'aimants permanents (5), au moins un aimant permanent (5) comprenant au moins un canal (10) de propagation d'un fluide s'étendant longitudinalement à l'intérieur de l'aimant permanent selon une direction parallèle à l'axe de rotation du rotor (2),
le canal de propagation comprenant une entrée de fluide et une sortie de fluide, **caractérisée en ce que** l'entrée de fluide est évasée et orientée dans un sens de rotation préférentiel de l'aimant permanent,
le canal est défini selon un axe longitudinal ayant un angle non nul par rapport à l'axe de rotation de ladite machine électrique, typiquement un angle d'inclinaison compris entre 1 et 10 degrés, typiquement 5 degrés, et le canal est de forme ondulée.

2. Machine électrique selon la revendication 1, dans laquelle le canal a un profil configuré pour qu'un fluide se propageant à l'intérieur du canal présente un écoulement turbulent.

3. Machine électrique selon l'une des revendications 1 à 2, dans laquelle l'aimant permanent et ledit au moins un canal (10) sont obtenus selon un procédé de fabrication additive.

4. Machine électrique selon l'une des revendications 1 à 3, dans laquelle chaque aimant (5) présente des canaux ayant des formes identiques ou différentes.

5. Machine à courant continu ou à courant alternatif tel qu'un générateur-démarreur, un alternateur, une pompe, comprenant une machine électrique selon l'une des revendications 1 à 4.

6. Moteur d'un aéronef, tel qu'un hélicoptère, comprenant un démarreur-générateur selon la revendication 5.

## Patentansprüche

1. Elektrische Maschine, die einen Stator (1) und einen Rotor (2) umfasst, die für den Rotationsantrieb im Verhältnis zueinander ausgelegt sind, wobei der Rotor (2) oder der Stator eine Vielzahl von Dauermagneten (5) umfasst, wobei mindestens ein Dauermagnet (5) mindestens einen Kanal (10) für die Ausbreitung eines Fluids umfasst, der sich längs im Inneren des Dauermagneten gemäß einer Richtung parallel zur Rotationsachse des Rotors (2) erstreckt,
wobei der Ausbreitungskanal einen Fluideinlass und einen Fluidauslass umfasst,
**dadurch gekennzeichnet, dass** der Fluideinlass erweitert und in einer bevorzugten Rotationsrichtung des Dauermagneten ausgerichtet ist,
der Kanal gemäß einer Längsachse definiert ist, die einen Winkel von nicht Null im Verhältnis zur Rotationsachse der elektrischen Maschine hat, in typischer Weise einen Neigungswinkel zwischen 1 und 10 Grad, in typischer Weise 5 Grad, und der Kanal wellig geformt ist.

2. Elektrische Maschine nach Anspruch 1, wobei der Kanal ein Profil hat, das ausgelegt ist, damit ein Fluid, das sich im Inneren des Kanals ausbreitet, eine turbulente Strömung aufweist.

3. Elektrische Maschine nach einem der Ansprüche 1 bis 2, wobei der Dauermagnet und der mindestens eine Kanal (10) gemäß einem additiven Fertigungsverfahren erhalten werden.

4. Elektrische Maschine nach einem der Ansprüche 1 bis 3, wobei jeder Magnet (5) Kanäle aufweist, die identische oder unterschiedliche Formen haben.

5. Gleichstrom- oder Wechselstrommaschine wie ein Starter-Generator, ein Wechselstromgenerator, eine Pumpe, umfassend eine elektrische Maschine nach einem der Ansprüche 1 bis 4.

6. Motor eines Fluggeräts wie ein Hubschrauber, umfassend einen Starter-Generator nach Anspruch 5.

## Claims

1. An electric machine comprising a stator (1) and a rotor (2) configured to be rotationally driven with respect to one another, said rotor (2) or said stator comprising a plurality of permanent magnets (5), at least one permanent magnet (5) comprising at least one fluid propagation channel (10) extending longitudinally inside the permanent magnet in a direction parallel to the axis of rotation of the rotor (2),
the propagation channel comprising a fluid inlet and a fluid outlet, **characterized in that** the fluid inlet is flared and oriented in a preferred direction of rotation of the permanent magnet,
the channel is defined along a longitudinal axis having a non-zero angle relative to the axis of rotation of said electric machine, typically an angle of inclination between 1 and 10 degrees, typically 5 degrees, and the channel being of undulating shape.

2. An electric machine according to claim 1, wherein the channel has a profile configured such that a fluid propagating inside the channel exhibits turbulent flow.

3. An electric machine according to any one of claims 1 to 2, wherein the permanent magnet and said at least one channel (10) are obtained by an additive manufacturing process.

4. An electric machine according to any one of claims 1 to 3, wherein each magnet (5) has channels with identical or different shapes.

5. Direct current or alternating current machine such as a starter generator, alternator, pump, comprising an electric machine according to one of claims 1 to 4.

6. Aircraft engine, such as an helicopter, comprising a starter-generator according to claim 5.
